# EUROPÄISCHE PATENTANMELDUNG

(11) **EP 0 904 990 A1**
(43) Veröffentlichungstag der Anmeldung: **31.03.1999**
(21) Anmeldenummer: 98118193.6
(22) Anmeldetag: 25.09.1998
(51) Int. Cl.: B60R 21/09, B60T 7/06

(54) **Betätigungseinheit**

(30) Priorität: 26.09.1997 DE 19742592
(71) Anmelder: ITT MANUFACTURING ENTERPRISES, INC., Wilmington, Delaware 19801 (US)
(72) Erfinder: Rüffer, Manfred, 65843 Sulzbach (DE); Neumann, Ulrich, 64380 Rossdorf (DE); Jungbecker, Johann, 55576 Badenheim (DE); Schmittner, Bernhard, 64380 Rossdorf (DE)
(74) Vertreter: Portwich, Peter

(57) **Zusammenfassung**

Es wird eine Betätigungseinheit für ein Kraftfahrzeug bestehend aus wenigstens einer, an einem Pedal angelenkten Kraftübersetzungseinheit, insbesondere einem Hauptbremszylinder oder einer Hauptbremszylinder-Bremskraftverstärkereinheit, wobei die Übersetzungseinheit schwenkbar angeordnet ist, beschrieben. Der Kern der Erfindung liegt darin begründet, daß die Kraftübersetzungeinheit (2) ein Schwenkgelenk aufweist, welches in Relation zu der Wirkungslinie (19) eines unfallbedingten Kraftangriffspunktes seitlich versetzt zu der Kraftübersetzungseinrichtung an einer Befestigungswand (6) des Kraftfahrzeuges vorgesehen ist. Die Betätigungseinheit weist den Vorteil auf, daß eine Schwenkachse für die Kraftübersetzungseinrichtung (2) klar definiert vorgegeben ist und daß der Verschwenkvorgang der Kraftübersetzungseinrichtung (2) unabhängig von der Deformation der Befestigungswand (6) ist.

## Beschreibung

Die Erfindung betrifft eine Betätigungseinheit mit den Merkmalen des Oberbegriffs des Patentanspruches 1.

Eine Betätigungseinheit ist aus der DE 195 06 607 A1 bekannt und umfaßt eine an einem Pedal angelenkte Kraftübersetzungseinheit, insbesondere einen Hauptbremszylinder oder eine Hauptbremszylinder-Bremskraftverstärkereinheit, wobei diese Übersetzungseinheit schwenkbar angeordnet ist.

Bei diesem Stand der Technik ist die Einheit aus ihrer Längsachse heraus ausknickbar angeordnet. Dadurch wird erreicht, daß die Bauteile der Betätigungseinheit bei einem Unfall in eine Position verschwenkbar sind, in der sie ein geringeres Verletzungsrisiko für die Kraftfahrzeug-Insassen bewirken. Zu diesem Zweck weist ein Befestigungsteil der Betätigungseinheit einen Wulst auf, welcher in einem zweiten Befestigungsteil aufgenommen ist. Dadurch wird eine freie Ausknickbarkeit der Betätigungseinheit bei einem Unfall ermöglicht. Weil die beiden Befestigungsteile quasi ein Kugelgelenk bilden, liegt keine bevorzugte Knickachse vor. Zwar hat man den Versuch unternommen, durch die gezielte Anordnung von geschwächten Befestigungsschrauben eine bevorzugte Knickachse herbeizuführen. Ein in allen Fällen sicheres und entlang einer vorbestimmten Achse erfolgendes Ausknicken kann mit diesen Mitteln allerdings nicht erreicht werden.

Es sind ferner noch verschwenkbare Betätigungseinheiten bekannt geworden, bei denen die unfallbedingte Deformation einer Befestigungwand für die Betätigungseinheit ausgenutzt wird, um diese zu verschwenken. Die Abhängigkeit der Schwenk-Bewegung von von dem im Detail unkontrollierbar ablaufenden Deformationsvorgang der Befestigungswand wird als nachteilig angesehen, weil auch der Verschwenkvorgang nicht kontrollierbar ist. Eine für alle Fälle vorbestimmte Schwenkachse liegt nicht vor, so daß Konstellationen denkbar sind, bei denen das Verletzungsrisiko für die Kraftfahrzeuginsassen nach der Deformation der Befestigungswand größer ist, als zuvor.

Aufgabe der vorliegenden Erfindung ist es daher, eine Betätigungseinheit bereitzustellen, welche bei einem Unfall entlang einer klar vorherbestimmten Achse ausknickbar ist, ohne von dem Deformationsverhalten einer Befestigungswand des Kraftfahrzeuges abhängig zu sein.

Diese Aufgabe wird mit den kennzeichnenden Merkmalen des Patentanspruches 1 dadurch gelöst, daß die Übersetzungseinheit ein Schwenkgelenk aufweist, welches in Relation zu einer Wirkungslinie eines unfallbedingten Kraftangriffspunkts seitlich versetzt zu der Übersetzungseinheit an einer Wand des Kraftfahrzeuges vorgesehen ist.

Erfindungsgemäß ist also ein Schwenkgelenk vorgesehen, welches den Vorteil aufweist, daß ein Verschwenken der Betätigungseinheit lediglich entlang einer Schwenkachse möglich ist. Weil das Schwenkgelenk ferner seitlich versetzt an der Übersetzungseinheit angeordnet ist, weist die Betätigungseinheit in Relation zu dem Schwenkgelenk einen Hebelarm auf, welcher sich beispielsweise dazu nutzen läßt, das angelenkte Pedal bei einem Unfall aktiv zurückzuziehen. Durch diese Maßnahme erhöht sich der Überlebensraum im Fußbereich deutlich, insbesondere wird die Verletzungswahrscheinlichkeit im Fußraum stark reduziert. Folglich wird davon ausgegangen, daß die Befestigungswand der Betätigungseinrichtung zu einem Sicherheitskäfig für die Kraftfahrzeuginsassen gehört, welcher grundsätzlich keine Deformation erleiden sollte. Also ist mit der Erfindung das Verschwenken der Betätigungseinheit selbst in Fällen möglich, bei denen nach dem bisherigen, bekannten Prinzip der Umfang oder die Art und Weise der Deformation (der Befestigungswand) für den Verschwenkvorgang nicht ausgereicht hätte. Deshalb unterliegen die Kraftfahrzeuginsassen bei der erfindungsgemäßen Betätigungseinheit einem noch geringeren Verletzungsrisiko.

Weiterbildungen und vorteilhafte Ausgestaltungen der Erfindung gehen aus Unteransprüchen zusammen mit der Beschreibung und der Zeichnung hervor. Die Erfindung wird nachstehend anhand der Zeichnung detailliert beschrieben. In der Zeichnung zeigt:
- Fig. 1: die erfindungsgemäße Betätigungseinheit in Seitenansicht schematisiert und in kleinerem Maßstab sowie im unverschwenkten Betriebszustand;
- Fig. 2: Ansicht wie in Fig. 1, jedoch in teilweise verschwenktem Zustand.

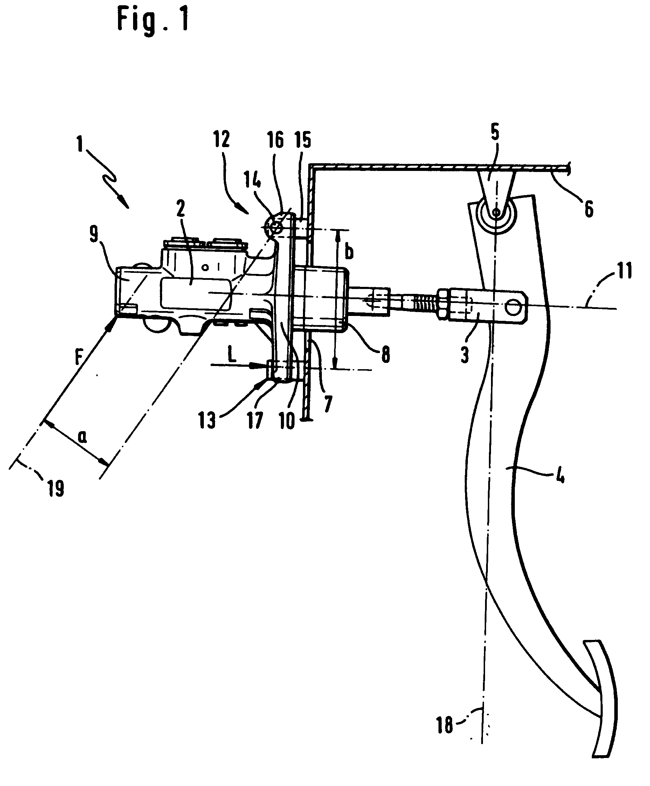

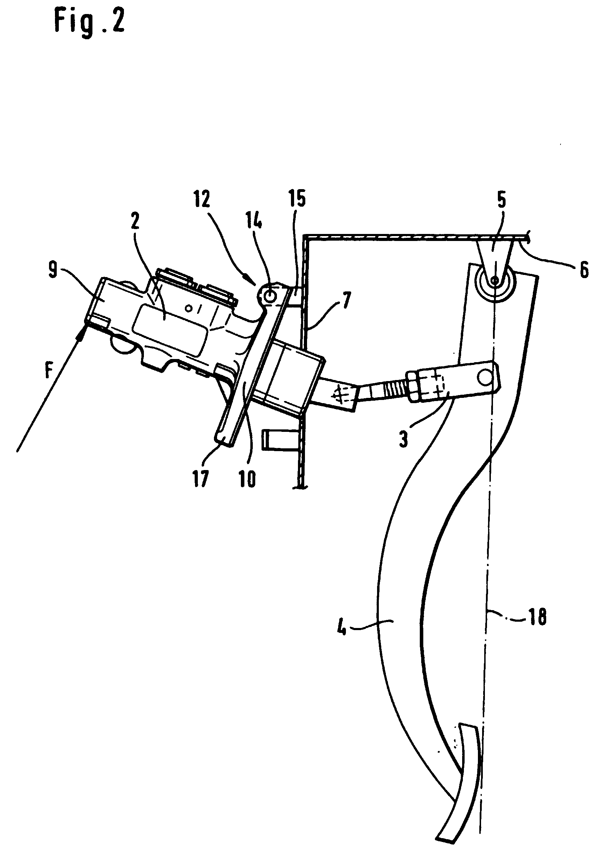

Eine Betätigungseinheit 1 gemäß Fig. 1 dient in einem Kraftfahrzeug der Betätigung einer Bremse oder, mit geringfügigen Abwandlungen, der Betätigung einer Kupplung oder anderer Organe. Die in der Figur beispielhaft gezeichnete Betätigungseinheit 1 umfaßt eine Kraftübersetzungseinrichtung 2, nämlich einen Hauptbremszylinder oder eine Hauptbremszylinder-Bremskraftverstärkereinheit, welche über ein einstellbares Gestänge 3 an einem Pedal 4 zur Fußbetätigung angelenkt ist. Das Pedal 4 ist mit einem Lagerbock 5 an einer lediglich schematisch verdeutlichten Befestigungswand 6 des Kraftfahrzeugs angeordnet. Ein im wesentlichen vertikaler Teil der Befestigungswand 6 ist zur Befestigung der Kraftübersetzungseinrichtung 2 vorgesehen und weist u.a. auch eine zumeist kreisförmige Ausnehmung 7 für einen Stutzen 8 der Kraftübersetzungseinrichtung 2 auf. Es ist darauf hinzuweisen, daß der zur Halterung der Kraftübersetzungseinrichtung 2 dienende Teil der Befestigungswand 6 zumeist leicht geneigt ist, so daß die Kraftübersetzungseinrichtung an ihrem vorderen, in Fahrtrichtung weisenden Endstück 9 nach oben weist. Wie der Figur zu entnehmen ist, weist der Hauptbremszylinder im Bereich der Befestigungswand 6 einen Flansch 10 auf, welcher seitlich versetzt zu der Achse 11 und insbesondere gemäß dem gezeichneten Ausführungsbeispiel rechtwinklig zu der Achse 11 angeordnet ist. Der Flansch 10 ist mit mindestens zwei Verankerungsstellen 12,13 an der Befestigungswand 6 fixiert. Bei der ersten Verankerungsstelle 12 handelt es sich um ein Schwenkgelenk, welches scharnierartig aufgebaut ist und einen Lagerzapfen 14 aufweist. Der Lagerzapfen 14 verbindet einen kraftfahrzeugseitigen Schenkel 15 und ein Endstück 16 des Flanschs 10 gelenkig miteinander. Der Schenkel 15 und das Endstück 16 bilden also quasi Scharnierelemente, welche mit Hilfe des Lagerzapfens 14 relativ zueinander schwenkbar sind. Ein anderes Endstück 17 des Flanschs 10 ist fest mit der Befestigungswand 6 verbunden. Damit es bei einem Unfall zu einem Verschenken der Kraftübersetzungseinrichtung 2 kommt, ist das Befestigungselement der Verankerungsstelle 13 derart mit einer Sollbruchstelle ausgestattet, daß normale, im Betrieb üblicherweise auftretende Kräfte anstandslos übertragen werden. Beanspruchungen welche nach Art und Größe über die normalen, im Betrieb auftretenden Kräfte hinausgehen, führen allerdings zu einem Versagen des Befestigungselementes der Verankerungsstelle 13, so daß die Verankerungsstelle 13 freigegeben wird und es zu einem Verschwenken der Kraftübersetzungseinrichtung 2 kommt. Weil diese mit Hilfe des Gestänges 3 an dem Pedal 4 angelenkt ist, kommt es bei einem Verschwenken der Kraftübersetzungseinrichtung 2 im Uhrzeigersinn um den Lagerzapfen 14 zu einer Rückzugsbewegung des Pedals 4 bis hinter die Bezugslinie 18, welche die Rückzugsbewegung in Fig. 2 verdeutlichen soll.

In Fig. 1 sind ferner die Kraft- und Hebelverhältnisse an der Betätigungseinheit 1 schematisch eingezeichnet. An der Kraftübersetzungseinrichtung 2 greift an dem Endstück 9 eine Kraft F an, die beispielsweise von dem Motorblock, einem Stoßdämpferdom oder einem anderen Bauteil des Kraftfahrzeugs hervorgerufen wird, der durch die Wucht eines Unfalls in Richtung Fahrerkabine beschleunigt wird. Weil die Kraft F relativ zu dem Lagerzapfen 14 mit einem Hebelarm a angreift, erzeugt sie ein Drehmoment im Uhrzeigersinn um den Lagerzapfen 14. Nur zur Veranschaulichung ist auch die Wirkungslinie 19 der Kraft F eingezeichnet. Das Befestigungselement der Verankerungsstelle 13 setzt diesem Drehmoment ein Gegendrehmoment entgegen, welches durch die Lagerkraft L multipliziert mit dem Hebelarm b bestimmt ist. Sobald die Lagerkraft L die Größe einer normalerweise im Betrieb auftretenden Kraft überschreitet, bricht das Befestigungselement und gibt die Verankerungsstelle 13 frei, so daß es zum Verschwenken der Kraftübersetzungseinrichtung 2 kommen kann. Es ist darauf hinzuweisen, daß der Lagerzapfen 14 als Schwenkachse dient und bezogen auf die wirkenden Kräfte F, L zwischen den effektiven Hebelarmen a, b der jeweiligen Kraftangriffspunkte liegt.

Bei einem anderen, nicht gezeichneten Ausführungsbeispiel der Erfindung kann es vorgesehen sein, daß ein separates Zugelement an der Kraftübersetzungseinrichtung angreift, um dieses alleine oder unterstützend in eine Verschwenkposition zu bringen. Es ist beispielsweise ein Drahtseilmechanismus denkbar, welcher mit geeigneten Umlenkrollen ausgestattet ist und wobei das Drahtseil mit einem Ende an dem Motorblock und mit einem anderen Ende an dem Endstück 9 befestigt ist. Eine unfallbedingte Verschiebung des Motorblocks relativ zu der Fahrgastzelle führt folglich zu einer Zugkraft F, die die Kraftübersetzungseinrichtung 2 in die Verschwenkposition zieht.

Die vorliegende Erfindung hat den Vorteil, daß die Verschwenkung der Kraftübersetzungseinrichtung unabhängig von der weitgehend zufälligen Verformung der Befestigungswand 6 ist. Es wird ferner die Möglichkeit verringert, daß der Hauptbremszylinder oder die Einheit aus Bremskraftverstärker und Hauptbremszylinder die Befestigungswand 6 deformiert.

Die Fig. 2 zeigt eine im Uhrzeigersinn um den Lagerzapfen 14 verschwenkte Kraftübersetzungseinrichtung 2. Durch die Schwenkbewegung ist das mit dem Gestänge 3 angelenkte Pedal 4 bis hinter die Bezugslinie 18 gezogen worden, so daß der Überlebensraum im Inneren der Fahrgastzelle vergrößert wird.

Es sind allerdings auch andere Ausführungsformen der Erfindung denkbar, bei denen durch den Schwenkvorgang die Anlenkung der Pedale 4 unterbrochen wird. Das Pedal 4 setzt somit dem Aufprall von Kraftfahrzeuginsassen keinen Widerstand entgegen.

## Patentansprüche

1. Betätigungseinheit für ein Kraftfahrzeug, bestehend aus wenigstens einer, an einem Pedal (4) angelenkten Kraftübersetzungseinheit (2), insbesondere einem Hauptbremszylinder oder einer Hauptbremszylinder-Bremskraftverstärkereinheit, wobei die Kraftübersetzungseinheit (2) schwenkbar angeordnet ist, dadurch **gekennzeichnet,** daß die Kraftübersetzungseinheit (2) ein Schwenkgelenk aufweist, welches in Relation zu der Wirkungslinie (19) eines unfallbedingten Kraftangriffspunktes seitlich versetzt zu der Kraftübersetzungseinheit (2) an einer Befestigungswand (6) des Kraftfahrzeuges vorgesehen ist.

2. Betätigungseinheit nach Anspruch 1, dadurch **gekennzeichnet,** daß das Schwenkgelenk einen Lagerzapfen (14) und mit dem Lagerzapfen (14) relativ zueinander schwenkbar angeordnete Scharnierelemente (15,16) aufweist.

3. Betätigungseinheit nach einem oder mehreren der vorhergehenden Ansprüche, dadurch **gekennzeichnet,** daß ein Scharnierelement (16) an der Kraftübersetzungseinheit (2) und ein weiteres Scharnierelement (15) kraftfahrzeugfest angeordnet ist.

4. Betätigungseinheit nach einem oder mehreren der vorhergehenden Ansprüche, dadurch **gekennzeichnet,** daß der Lagerzapfen (14) als Schwenkachse dient und bezogen auf die wirkenden Kräfte (F, L) im Übergang zwischen den effektiven Hebelarmen (a,b) der Kraftangriffspunkte der Kraftübersetzungseinrichtung (2) liegt.

5. Betätigungseinheit nach einem oder mehreren der vorhergehenden Ansprüche, dadurch **gekennzeichnet,** daß die Verankerungsstelle (13) ein Befestigungselement mit einer Sollbruchstelle aufweist.

6. Betätigungseinheit nach einem oder mehreren der vorhergehenden Ansprüche, dadurch **gekennzeichnet,** daß ein Zugelement im Bereich des Endstücks (9) und/oder im Bereich der Verankerungsstelle (13) an der Kraftübersetzungseinrichtung (2) angreift.
